(19) Europäisches Patentamt
European Patent Office
Office européen des brevets

(11) Publication number: **0 609 713 A1**

(12) **EUROPEAN PATENT APPLICATION**

(21) Application number: **94100800.5**

(51) Int. Cl.5: **C09J 7/02**

(22) Date of filing: **20.01.94**

(30) Priority: **04.02.93 JP 41869/93**

(43) Date of publication of application: **10.08.94 Bulletin 94/32**

(84) Designated Contracting States: **DE FR GB**

(71) Applicant: **NITTO DENKO CORPORATION**
**1-2, Shimohozumi 1-chome**
**Ibaraki-shi**
**Osaka(JP)**

(72) Inventor: **Yoshida, Yoshinori, c/o Nitto Denko Corporation**
**1-2, Shimohozumi 1-chome**
**Ibaraki-shi, Osaka(JP)**
Inventor: **Sakai, Isoji, c/o Nitto Denko Corporation**
**1-2, Shimohozumi 1-chome**
**Ibaraki-shi, Osaka(JP)**
Inventor: **Shinomura, Toshihiko, c/o Nitto Denko Corporation**
**1-2, Shimohozumi 1-chome**
**Ibaraki-shi, Osaka(JP)**

(74) Representative: **Patentanwälte Grünecker, Kinkeldey, Stockmair & Partner**
**Maximilianstrasse 58**
**D-80538 München (DE)**

(54) **Pressure-sensitive adhesive tape.**

(57) A pressure-sensitive adhesive tape comprising a substrate film and a pressure-sensitive adhesive layer containing a polymeric elastomer formed on at least one surface of the substrate film, wherein the substrate film and/or the polymeric elastomer of the pressure-sensitive adhesive layer contains at least 20% by weight based on the weight of the polymeric elastomer of a biodegradable high molecular weight material.

Fig. 1

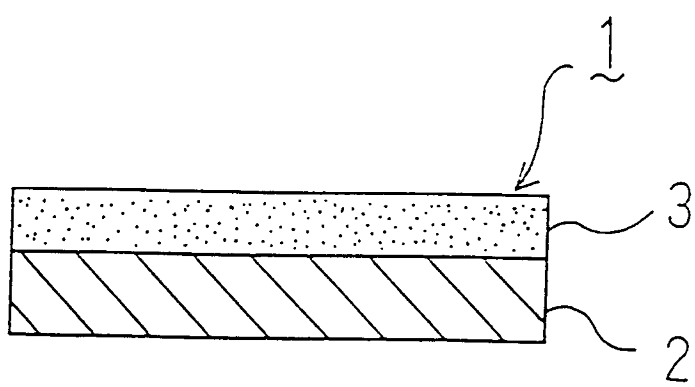


EP 0 609 713 A1

## FIELD OF THE INVENTION

The present invention relates to a pressure-sensitive adhesive tape, and more particularly to a pressure-sensitive adhesive tape which can be widely used in industrial fields, for example, an agriculture and forest field and an gardening field such as wrapping of fruits with paper bags, bundling of vegitables, etc.; a hygiene field such as fixing of diapers, sanitary towels, etc.; a medical field such as medical bandages, dressings, etc.; and a packing field of various materials, and which can largely contribute to environmental preservation without accumulation of wastes after use because the tape is naturally or easily decomposed by enzymes or microorganisms in water and soil.

The term "biodegradation" or "biodegradable property" used herein means that a high molecular weight compound is converted into low molecular weight compounds with enzymes or microorganisms. On the other hand, the term "decomposition" or "decomposable property" used herein means that by the biodegradable property and by the convertion of a biogradable high molecular weight material into low molecular weight compounds, the molded article of the biodegradable high molecular weight material is collapsed.

## BACKGROUND OF THE INVENTION

Materials produced by the development of industry, in particular, synthetic plastics make our living good due to the property which is difficult to decompose. However, on the other hand, the wastes of these materials give bad influences such as staining natural scenes, injuring wild animals, etc.

The amount of plastics discharged in Japan as general waste materials and industrial waste materials is over 5,000,000 tons per year.

Incinerations and landfills have been practiced as the means for treating these wastes. However, the incineration involves the problems such as the consumption of fuels and the secondary pollution by the secondary products thereof, and the landfill also involves a problem that suitable places for the landfill will lack sooner or later. Thus, various problems already occur in the treatments of these waste materials in the present situation.

In the increase of the concern about the environmental pollution problem of the earth in the world-wide scale, the environmental disruption problem caused by the accumulation of industrial waste materials and living waste materials is regarded as important. Thus, development of a new treatment method of synthetic plastics or development of new materials having an easily decomposable property after being wasted has been desired in the world.

With the development of industries after World War II, the use field of pressure-sensitive adhesive tapes has been increased. At present, pressure-sensitive adhesive tapes are widely used in various industrial fields such as agriculture and forestry, gardening, hygiene, packaging, medical treatment, architecture, industrial materials, electronic materials, etc., and have taken a role of industrial materials.

In general, a pressure-sensitive adhesive tape comprises a pressure-sensitive adhesive which gives the performance of the tape and a substrate film which protects and reinforces the pressure-sensitive adhesive and also imparts a smooth surface.

The pressure-sensitive adhesives generally used are a so-called rubbery pressure-sensitive adhesive comprising two components of a polymeric elastomer and a tackifier, i.e., mainly comprising a rubbery elastomer such as a natural rubber, polyisoprene, polyisobutyrene, a butyl rubber, a styrene-butadiene rubber, etc., and a tackifier added thereto; an acrylic pressure-sensitive adhesive comprising a homopolymer of an acrylic acid ester or a copolymer of an acrylic acid ester and a vinyl monomer such as vinyl acetate, a methacrylic acid ester, acrylic acid, methacrylic acid, etc.; a vinyl pressure-sensitive adhesive comprising a vinyl polymer such as a vinyl chloride/vinyl acetate copolymer, a vinyl acetate polymer, etc., and a plasticizer added thereto; a silicone adhesive comprising a rubbery siloxane and resinous siloxane, etc.

On the other hand, examples of the substrate film are papers (a Japanese paper, a kraft paper, etc.), cloths (a cotton cloth, a staple fiber cloth, a chemical fiber cloth, a non-woven fabric, etc.), plastics (cellophane, polyethylene, polyester, polyvinyl chloride, acetate, polypropylene, polyethylene terephthalate, polystyrene, polyacrylonitrile, etc.); etc. The film is properly selected for the use thereof according to the use and the purpose of the pressure-sensitive adhesive tape.

However, the pressure-sensitive adhesive tapes which are widely used in various industrial fields as described above have problems described below on the materials for constituting the pressure-sensitive adhesive tapes.

That is, in the pressure-sensitive adhesive tapes using papers or cloths as the substrate films, many properties such as water resistance, etc., are inferior to the pressure-sensitive adhesive tapes using plastic substrate materials. Further, natural celluloses and the derivatives thereof used as the substrate films mainly use pulps as the raw materials and hence there is a problem that the use of such materials is undesirable from the standpoint of saving forest resources by a global scale at present.

On the other hand, since plastic substrates, etc., are not decomposed or the decomposition speed thereof is very slow in the natural environment, these materials are usually materials which are difficult to decompose and there is a problem that these materials become waste materials which cause an environmental disruption after use.

Furthermore, when the waste materials of these pressure-sensitive adhesive tapes are subjected to an incineration treatment, the problems remain that the incinerator is damaged by a high temperature heat generated at the incineration and in the case of generating toxic gases such as halogen or halide gases, a specific equipment is required to remove these gases. In particular, in Japan wherein the treatment of the wastes is mainly carried out by incineration, the above-described problems are becoming serious.

Accordingly, pressure-sensitive adhesive tapes which are widely used in various industrial fields are accumulated as waste materials over a long period of time without being decomposed or collapsed in the natural environment after use and have become a cause of environmental pollutions under existing circumstances.

Thus, under these circumstances, the development of pressure-sensitive adhesive tapes which are widely used in various industrial fields and waste materials of which after use do not become a cause of an environmental disruption has been desired.

## SUMMARY OF THE INVENTION

Accordingly, an object of the present invention is to overcome all the problems in the conventional techniques as described above.

It has now been found that the above object can be achieved by the present invention.

That is, the object of the present invention is to provide a pressure-sensitive adhesive tape comprising a substrate film and a pressure-sensitive adhesive layer containing a polymeric elastomer formed on at least one surface of the substrate film, wherein at least one of the substrate film and the polymeric elastomer of the pressure-sensitive adhesive layer contains at least 20% by weight of a biodegradable polymeric material.

## BRIEF DESCRIPTION OF THE DRAWINGS

Figure 1 is an enlarged cross sectional view showing one example of the pressure-sensitive adhesive tape of the present invention,

Figure 2 is an enlarged cross sectional view showing another example of the pressure-sensitive adhesive tape of the present invention, and

Figure 3 is an enlarged cross sectional view showing further example of the pressure-sensitive adhesive tape of the present invention.

## DETAILED DESCRIPTION OF THE INVENTION

The present invention is described in detail below.

In the pressure-sensitive adhesive tape of the present invention, the substrate film and/or the pressure-sensitive adhesive layer are naturally decomposed or collapsed by the action of enzymes or microorganisms in the natural environment and is incorporated in the material circulating system on the earth, whereby the pressure-sensitive adhesive tape of the present invention does not become a waste material after use and does not give a cause of forming an environmental disruption.

Accordingly, when the pressure-sensitive adhesive tapes of the present invention are used for wrapping of fruits with bags, bundling of vegitables, etc., in the field of agriculture and forest, gardening, etc., and are allowed to stand as they are, they are naturally decomposed or collapsed by the action of microorganisms in soil, etc.

On the other hand, since the pressure-sensitive adhesive tapes of the present invention used in the fields of medical treatment, hygiene, packaging, industrial materials, etc., are naturally decomposed or collapsed by the action of enzymes or microorganisms in a natural environment after use, a specific equipment is not required for the treatment of the wastes of the pressure-sensitive adhsive tapes after use,

and as a result, the pressure-sensitive adhesive tapes of the present invention can be widely used without any anxiety in various fields and can contribute to the environmental preservation of the earth.

The construction of the pressure-sensitive adhesive tape of the present invention is described in detail by referring to the accompanying drawings.

Fig. 1 is an enlarged schematic cross sectional view showing one example of the pressure-sensitive adhesive tape of the present invention. As shown in Fig. 1, the pressure-sensitive adhesive tape 1 comprises a substrate film 2 having a pressure-sensitive adhesive layer 3 formed on one surface of the substrate film 2.

Fig. 2 is an enlarged schematic cross sectional view of another example of the pressure-sensitive adhesive tape of the present invention. As shown in Fig. 2, the pressure-sensitive adhesive tape 1 comprises a substrate film 2 having pressure-sensitive adhesive layers 3, 3 formed on both the surfaces of the substrate film 2.

Furthermore, Fig. 3 is an enlarged schematic cross sectional view of further example of the pressure-sensitive adhesive tape. As shown in Fig. 3, the pressure-sensitive adhesive tape 1 comprises a substrate film 2, a pressure-sensitive adhesive layer 3 formed on one surface of the substrate film 2, and a releasable paper 4 formed on the pressure-sensitive layer 3.

In the present invention, it is the essential element that the substrate film 2 and/or a polymeric elastomer of the pressure-sensitive adhesive layer 3 contains at least 20% by weight based on the weight of the polymeric elastomer of a biodegradable high molecular weight material.

Examples of the biodegradable high molecular weight material which can be decomposed by enzymes or microorganisms, used in the present invention are high molecular weight materials produced by microorganisms, high molecular weight materials which exist in natural materials, and high molecular weight materials obtained by chemical synthesis methods.

Examples of the high molecular weight materials produced by microorganisms are a polysaccharide such as curdlan, pullulan, bacteria cellulose, etc.; polyamino acids such as polyglutamic acid ($\gamma$-PGA), polylysine ($\epsilon$-PL), etc.; and an aliphatic polyester having a repeating unit represented by following formula (1) or (2).

$$-\!\left( O-(CH_2)_x-\overset{R}{\overset{|}{C}}H-(CH_2)_y-\overset{O}{\overset{\|}{C}} \right)_z\!- \qquad (1)$$

wherein x represents an integer of at least 0; y and z each represents an integer of at least 1; and R represents a hydrogen atom, a saturated aliphatic hydrocarbon group, an unsaturated aliphatic hydrocarbon group, or a saturated aliphatic hydrocarbon group having a halogen atom or a functional group selected from a hydroxyl group, a carboxyl group, a sulfonic acid group, and an amino group at the terminal;

$$-\!\left[ \left( O-(CH_2)_x-O \right) \left( \overset{O}{\overset{\|}{C}}-(CH_2)_y-\overset{O}{\overset{\|}{C}} \right) \right]_z\!- \qquad (2)$$

wherein x, y, and z each represents an integer of at least 1.

Examples of the aliphatic polyester having the repeating unit described above are homopolymers each having a 3-hydroxypropionate unit, a 3-hydroxybutyrate unit, a 3-hydroxyvalerate unit, a 3-hydroxyhexanoate unit, a 3-hydroxyheptanoate unit, a 3-hydroxydecanoate unit, a 3-hydroxynonanoate unit, a 3-hydroxydecanoate unit, a 4-hydroxybutyrate unit, a 4-hydroxyvalerate unit, a 5-hydroxyvalerate unit, etc., as the structural unit and the copolymers of these units.

Representative examples of the homopolymers or copolymers are a homopolymer [P(3HB)] of the 3-hydroxybutyrate unit (hereinafer referred to as "3HB") represented by the following formula (3) (hereinafter, P shows a polymer), a copolymer [P(3HB-co-3HV)] of 3HB and the 3-hydroxyvalerate unit (hereinafter referred to as "3HV") represented by the following formula (4), a copolymer [P(3HB-co-4HB)] of 3HB and the 4-hydroxybutyrate unit (hereinafter referred to as "4HB") represented by the following formula (5), and a polyhydroxy alkanoate (hereinafter referred to as "PHA") having a repeating unit represented by the following formula (6).

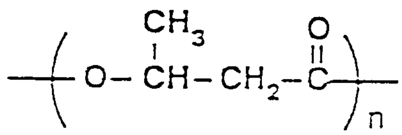

(3)

wherein n represents an integer of at least 1;

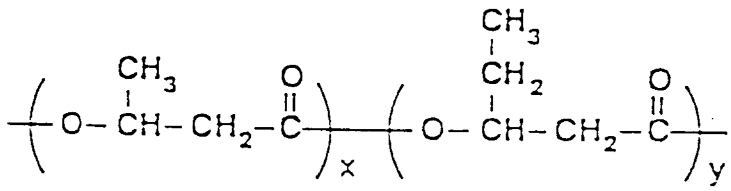

(4)

wherein x and y each represents an integer of at least 1;

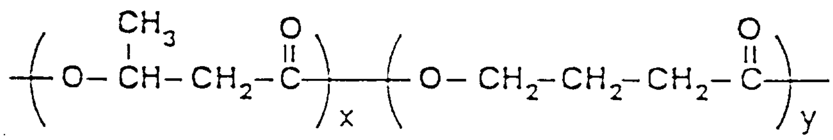

(5)

wherein x and y each represents an integer of at least 1;

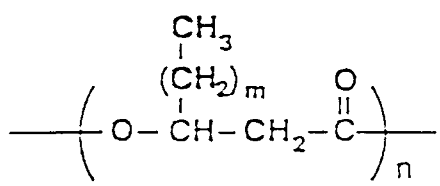

(6)

wherein m represents an integer of from 2 to 8 and n represents an integer of at least 1.

Methods for synthesizing the above-described aliphatic polyester by microorganisms include a method of incubating, for example, a microorganism having an ability for synthesizing a polyester by 2 stages of a first stage incubation which grows cells in a culture medium enriched with a nutrient and a second stage which forms and accumulates the desired polyester in the cells by restraining any one of the essential components for the growth of the cells such as nitrogen, phosphorus, or various kinds of inorganic nutrients.

As described above, in the incubation of the second stage, by omitting any one of the components essential for the growth of the cells such as nitrogen, etc., or by exhausting the essential components for the growth during the incubation, the growth of the cells is restrained and the synthesis of the polyester is conducted with a good efficiency.

Examples of the microorganisms having an ability for synthesizing a polyester are the genus Alcaligenes such as Alcaligenes eutrophus H 16, Alcaligenes faecalis, Alcaligenes latus, etc.; the genus Pseudomonas such as Pseudomonas acidovorans, Pseudomonas oleovorans, etc.; Paracoccus denitrificans; and Rhodospirillum rubrum, but there is no particular restriction on the microorganisms used in the present invention, and a specific kind selected from the microorganisms having a polyester-synthesizing ability can be property and optionally selected.

Further, there is no particular restriction on the method of the incubation, and a batch incubation method or a continuous incubation method can be used.

The cells grown in the incubation of the first stage are separated from the culture liquid by filtration or centrifugal separation and transferred to the incubation of the second stage, or after consuming at least one of the components essential for the growth of the cells in the culture medium during the step of growing the

cells in the incubation of the first stage, the cells are transferred to the incubation of the second stage.

The incubation conditions in each of the first stage and the second stage are such that the cells are aerobically incubated at a temperature of from about 20 to 40 °C and pH of from about 6 to 10.

In this case, it is more suitable for the formation and the accumulation of a polyester to restrain nitrogen or phosphorus as the essential component for the growth of the cells, rather to restrain other inorganic nutrient such as potassium, magnesium, etc., although there is no particular restriction on the nutrient to be restrained.

The culture medium components used for the incubation are as follows.

Suitable examples of the carbon source are saccharides such as glucose, fructose, mannose, etc.; synthetic carbon sources such as methanol, ethanol, acetic acid, butyric acid, etc.,; and natural carbon sources such as a yeast extract, peptone, a meat extract, etc., although there is no particular restrction on the carbon source.

Suitable examples of the nitrogen source are inorganic nitrogen compounds such as ammonia, ammonium salts, nitrates, etc. and organic nitrogen compounds such as peptone, a yeast extract, a meat extract, etc.

Suitable examples of the phosphorus source are phosphates.

Further, suitable examples of the inorganic nutrients are cations of inorganic salts of potassium, magnesium, calcium, iron, manganese, cobalt, zinc, copper, etc.

In such a synthesis method using microorganisms, optional carbon source selected according to the structure of the aliphatic polyester to be obtained is used alone or as a mixture thereof in the incubation of the second stage wherein a polyester is formed and accumulated in the cells.

It is preferred that the substrate is continuously used in the incubation of the second stage, but a part of the substrate may be used and the substrate may be added separately several times.

After completion of the incubation, the cells are separated from the culture liquid by filtration or centrifugal separation and the polyester accumulated in the cells is extracted.

There is no particular restriction on the extraction method of the polyester but the polyester can be easily obtained by, for example, extracting with a solvent such as chloroform and precipitating the polyester from the extract using a poor solvent.

In the synthesis method by microorganisms as described above, the microorganims used and the carbon source used in the incubation of the second stage can be variously selected according to the structure of the aliphatic polyester to be obtained.

That is, in the case of synthesizing the homopolymer of 3HB, one kind of the microorganisms having a polyester-synthesizing ability described above is used, the microorganism is incubated by the above-described two stage incubation method of the first stage and the second stage, and in particular, glucose, fructose, acetic acid, butyric acid, methanol, or the like is used as the carbon source in the incubation of the second stage.

In the case of synthesizing P(3HB-co-3HV), Alcaligenes eutrophus is used as the microorganism and, in particular, propionic acid, valeric acid, pentanol, or the like is used as the carbon source in the incubation of the second stage.

In the case of synthesizing P(3HB-co-4HB), Pseudomonas acidovorans is used as the microorganism and, in particular, 4-hydroxybutyric acid, 1,4-butanediol, or the like is used as the carbon source in the incubation of the second stage.

By using, in particular, Pseudomonas oleovorans in the microorganisms described above and by using octanoic acid, nonanic acid, etc., polyhydroxyalkanoate (PHA) can be synthesized in the incubation of the second stage.

Further, an aliphatic polyester having the repeating unit represented by the following formula (7);

$$\left[\left(O-(CH_2)_x-O\right)\left(\overset{\overset{O}{\|}}{C}-(CH_2)_y-\overset{\overset{O}{\|}}{C}\right)\right]_z \qquad (7)$$

wherein x, y, and z each represents an integer of at least 1, and alternately having the diol unit and the dicarboxylic acid unit can be synthesized by the condensation of a diol such as ethylene glycol, propane diol, butane diol, pentane diol, hexane diol, etc., and a dicarboxylic acid such as malonic acid, succinic acid, glutaric acid, adipic acid, etc.

On the other hand, suitable examples of the high molecular weight material which exist in natural materials are starches; polysaccharides as marine products such as chitin, chitosan, alginic acid, carrageenan, etc.; cellulose and the derivatives thereof; and collagen.

Examples of the starches are raw starches such as corn starch, sugar cane starch, cassava starch, sago starch, tapioca starch, sorghum starch, wheat starch, pulse starch, potato starch, rice starch, arrowroot starch, bracken starch, lotus starch, water chestnut starch, etc.; physically denatured starches such as α-starch, fractional amylose, wet-heat treated starch, etc.; enzyme-treated starches such as dextrin, amylose, etc.; chemical decomposition denatured starches such as acid-treated starch, oxidized starch, dialdehyde starch, etc.; esterified starches such as acetic acid esterified starch, succinic acid esterified starch, nitric acid esterified starch, phosphoric acid esterified starch, urea-phosphoric acid esterified starch, xanthogenic acid esterified starch, acetoacetic acid esterified starch, etc.; etherified starches such as allyl etherified starch, methyl etherified starch, carboxymethyl etherified starch, carboxyethyl etherified starch, hydroxyethyl etherified starch, hydroxypropyl etherified starch, etc.; starches rendered cationic such as the reaction product of starch and 2-diethylaminoethyl chloride, the reaction product of starch and 2,3-epoxypropyltrimethyl ammonium chloride, etc.; and crosslinked starches such as formaldehyde crosslinked starch, epichlorohydrin crosslinked starch, phosphoric acid crosslinked starch, acrolein crosslinked starch, etc.

Also, suitable examples of the high molecular weight material obtained by a chemical synthesis method are aliphatic polyesters such as a 3HB homopolymer, polycaprolactone (hereinafter referred to as "PCL"), polylactic acid, polyglycolic acid, etc., and the copolymers of them.

As the chemical synthesis method, by ring-opening polymerizing a lactone using an initiator synthesized by reacting, for example, triethylaluminum ($AlEt_3$) or diethylzinc ($ZnEt_2$) with water and an alcohol or using methylaluminoxane, the 3HB homopolymer can be synthesized from β-butyrolactone or PCL can be synthesized from ε-caprolactone.

Since these high molecular weight materials have a biodegradable property that they are decomposed by enzymes or microorganisms in water or soil and are reduced into a circulation cycle of an ecosystem, these high molecular weight materials can be suitably used in the present invention.

In the present invention, each of the biodegradable high molecular weight materials described above is used for the substrate film and/or the polymeric elastomer of the pressure-sensitive adhesive layer of the pressure-sensitive adhesive tape of the present invention alone or as a mixture thereof.

The amount of the biodegradable high molecular weight material used in the present invention is required to be at least 20% by weight based on the weight of the polymeric elastomer in any case of using for the substrate film and/or the polymeric elastomer constituting the pressure-sensitive adhesive layer. Also, in the case of using the starches as the biodegradable high molecular weight material, the upper limit of the amount of the biodegradable high molecular weight material used is preferably 90% by weight.

The reason is as follows. If the amount of the biodegradable high molecular weight material is less than 20% by weight, the decomposition or collapse of the pressure-sensitive adhesive tape of the present invention by enzymes or microorganisms after use becomes difficult. Further, when the starches are used as the biodegradable high molecular weight materials, if the amount thereof is over 90% by weight, the molding property of the substrate film undesirably deteriorates.

In the present invention, the above-described biodegradable high molecular weight material can be used by optionally mixing with a proper material. In particular, the copolymer of 3HB and 4HB (3HB-co-4HB), the copolymer of 3HB and 3HV (3HB-co-3HV), or PHA having the repeating unit represented by the following formula (8)

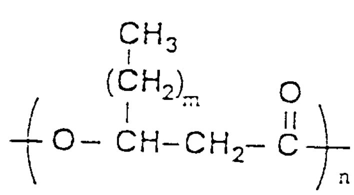

(8)

wherein m represents an integer of from 2 to 8 and n represents an integer of at least 1,

each having a glass transition temperature of -20 °C or less, can be preferably used as the biodegradable high molecular weight material used for the polymeric elastomer constituting the pressure-sensitive adhesive layer.

A mixture of the above-described biodegradable high molecular weight material and other synthetic resin can also be suitably used in the present invention.

Further, a mixture of from 20 to 90% by weight of starch(es) as the biodegradable high molecular weight material(s) and from 80 to 10% by weight of a synthetic resin can be used as the substrate film.

There is no particular restriction on the synthetic resin used as the mixture with the biodegradable high molecular weight materials such as the aliphatic polyesters described above, but since the aliphatic polyester is a thermoplastic resin, a thermoplastic high molecular weight material is preferably used as the synthetic resin for shaping or molding.

Examples of the synthetic resin are acrylic polymers such as polyethylene, polypropylene, polyvinyl chloride, polyvinylidene chloride, polyvinyl acetate, polystyrene, polyvinyl alcohol, an ethylene-vinyl alcohol copolymer, polymethyl methacrylate, etc.; aromatic polyesters such as polyethylene terephthalate, polybutylene terephthalate, etc.; polyamides such as nylon 6, nylon 66, etc.; polyurethanes such as 2,6-polyurethane, etc.; and thermoplastic elastomers, e.g., styrenic elastomers such as a block copolymer of butadiene and styrene, etc., polyester elastomers such as a block copolymer of polybutyrene terephthalate and polytetramethylene oxide glycol, etc., urethane elastomers, amide elastomers, etc. These polymers can be used alone or as a mixture thereof.

In addition, in the present invention, when the starches are used as a mixture with the thermoplastic synthetic resin, a method of improving the compatibility of the starches with the synthetic resin by breaking the crystallinity of the starch by a proper conventional manner can be optionally employed.

The pressure-sensitive adhesive layer in the pressure-sensitive adhesive tape of the present invention can further contain various additives which are used for pressure-sensitive adheisve layers employed for conventional pressure-sensitive adhesive tapes, for example, tackifiers such as natural resins (rosin, dammal, etc.), modified rosin, derivatives of rosin and modified rosin, polyterpene resins, terpene modified products, aliphatic hydrocarbon resins, a cyclopentadiene resin, aromatic petroleum resins, phenolic resins, alkylphenol-acetylene resins, styrenic resins, a coumarone-indene resin, a xylene resin, a vinyltoluene-$\alpha$-mehylstyrene copolymer, etc.; plasticizers such as adipic acid ester plasticizers, sebacic acid ester plasticizers, recinoleic acid ester plasticizers, polyester plasticizers, epoxy plasticizers, chlorinated paraffin, etc.; fillers such as clay, titanium oxide, zinc white, aluminum hydrate, calcium carbonate, pigments, diatomaceous earth, silica gel, talc, etc.; and other additives such as a softener, an antioxidant, a stabilizer, an antifungal agent, a thickener, a coloring agent, a defoaming agent, an adhesion improving agent, an undercoating agent, a back surface treating agent, etc., according to the use and the purpose of the pressure-sensitive adhesive tape in an amount such that the effects of the present invention are not impaired.

In other words, in the substrate film and/or the pressure-sensitive adhesive layer in the present invention, the kind and the amount of the resin mixed with the biodegradable high molecular weight material, which is one of the essential components, can be optionally selected so as to meet the various properties and the decomposition rate thereof according to the purposes of use. Also, the kind and the amount of various additives mixed with the biodegradable high molecular weight material in the pressure-sensitive adhesive can be optionally selected.

Furthermore, in the pressure-sensitive adhesive tape of the present invention, the biodegradable high molecular weight material can be used for both or one of the substrate film and the pressure-sensitive adhesive layer of the polymeric elastomer, which can be properly selected according to the purpose.

For example, when the pressure-sensitive adhesive tape is wasted as it is in the natural environment (for example, in the case of using the tape for bundling of agricaltural products), it is preferred to use the biodegradable high molecular weight material for both the substrate film and the polymeric elastomer of the pressure-sensitive adhesive layer.

When one of the substrate film and the pressure-sensitive adhesive layer is required to be removed by an enzyme treatment during the production step of other product using the pressure-sensitive adhesive tape of the present invention, one of the substrate film and the polymeric elastomer which constitutes the pressure-sensitive adhesive layer may be constituted by a material containing the biodegradable high molecular weight material.

There is no particular restriction on the method of using the pressure-sensitive adhesive tape of the present invention which can employ an optional form, but it can be particularly preferably employed in the fields of agriculture and forest, gardening, hygiene, packaging, etc., which have a high possibility that the tape is allowed to stand as it is in the natural environment after use.

For example, the pressure-sensitive adhesive tape of the present invention can be suitably used for wrapping of fruits with paper bags, bundling of vegitables, trimming of garden trees and dwarf trees, correction of the shape of branches, sowing tapes, etc.

The pressure-sensitive adhesive tape can also be suitably used for adhering and fixing a diaper or a sanitary towel, splicing of toilet papers for a flush toilet, etc.

Furthermore, in the present invention, when the polymeric elastomer which constitutes the pressure-sensitive adhesive layer is formed from a biodegradable high molecular weight material, the polymeric elastomer becomes a low skin irritative decomposable high molecular weight material, and hence the pressure-sensitive adhesive tape of the present invention is particularly useful in the medical field such as plasters, dressing products, etc.

The pressure-sensitive adhesive tape of the present invention described hereinbefore is decomposed or collapsed with microorgansims in water or soil after being wasted, but can be decomposed or collapsed with an enzyme.

Also, when the substrate film and/or the pressure-sensitive adhesive layer of the pressure-sensitive adhesive tape is required to remove in the step of producing other product using the pressure-sensitive adhesive tape, it can be removed by decomposing or collapsing with an enzyme.

In addition, the enzymes described above are enzymes which have a function of cutting the chain of a high molecular weight compound to reduce the molecular weight thereof, and which are originated from microorganisms or various ecosystems, and isolated and purified. Examples of the enzyme are amylase, cellulase, esterase, lipase, glucosidase, and PHA decomposed enzymes secreted by Alcaligenes faecalis TI, Pseudomonas lemoignei, Penicillium funiculosum, Comamonas testosteroni, etc., in the outside of the cells.

However, since these enzymes have each substrate specificity, an enzyme which is capable of decomposing a biodegradable high molecular weight material may be properly selected according to the kind of the biodegradable high molecular weight material.

The effects of the pressure-sensitive adhesive tapes of the present invention are more clarified by the following examples and the comparative example, but the invention is not limited to these examples.

## EXAMPLE 1

A copolymer [P(76%3HB-co-24%3HV); made of Aldrich Co.] of 3-hydroxybutyric acid and 3-hydroxyvaleric acid was dissolved in chloroform and the solution was casted on a glass plate followed by drying to form a film having a thickness of 100 $\mu$m and a width of 30 cm. The film was used as a substrate film of a pressure-sensitive adhesive tape.

Using Pseudomonas acidovorans IFO-13582, a polyester was produced as follows.

A culture liquid was prepared by mixing 1 liter of distilled water with 10 g of polypeptone, 10 g of a yeast extract, 5 g of ammonium sulfate, and 5 g of a meat extract. Cell was grown by incubating in the resulting culture liquid at 26 °C for 48 hours to conduct the first stage incubation.

After completion of the first stage incubation, the cells thus grown were separated by centrifugal separation.

A culture liquid was prepared using inorganic nutrients such as phosphorus, magnesium, slight amounts of other elements, etc., and 1,4-butanediol as a carbon source according to the following formulation.

(In 1 liter of distilled water):

| | |
|---|---|
| $K_2HPO_4$ | 5.8 g |
| $KH_2PO_4$ | 3.7 g |
| $MgSO_4$ | 0.12 g |
| 1,4-Butanediol | 5.0 g |
| Slight amount element solution* | 1 ml |

(*): The slight amount element solution is a solution containing following inorganic nutrients in 1N hydrochloric acid.

| | |
|---|---|
| $FeSO_4.7H_2O$ | 2.78 g |
| $MnCl_2.4H_2O$ | 1.98 g |
| $CoSO_4.7H_2O$ | 2.81 g |
| $CaCl_2.2H_2O$ | 1.67 g |
| $CuCl_2.2H_2O$ | 0.17 g |
| $ZnSO_4.7H_2O$ | 0.29 g |

After adjusting pH of the culture liquid to 7.0, the cells separated in the first stage were transferred into the culture liquid and the incubation of the second stage was conducted in the culture liquid at 26°C for 98 hours, whereby the polyester was formed and accumulated in the cells.

After completion of the incubation, the cells were separated from the culture liquid by centrifugal separation, washed with water, and extracted with chloroform. The extract was once concentrated and hexane was added to the concentrate to precipitate the polyester obtained.

The precipitates were collected and dried to obtain the polyester originated from the microorganism.

From the results of the integration value of 100 MHz, $^1$H-NMR, it was confirmed that the composition of the polyester obtained was composed of 13% of 3HB and 87% of 4HB.

100 Parts by weight of the polyester [P(13%3HB-co-87%4HB)], 70 parts by weight of a tackifier composed of an aliphatic petroleum resin (softening point 90°C), 20 parts by weight of a softening agent composed of a rosin resin which was in a liquid state at room temperature, and 1 part by weight of an antioxidant composed of phenolic compound were kneaded at a temperature of 80°C to obtain a pressure-sensitive adhesive.

The pressure-sensitive adhesive was coated on one surface of a substrate film to obtain a pressure-sensitive adhesive tape having a thickness of 120 µm.

The pressure-sensitive adhesive tape was buried in the soil at Shimohozumi, Ibaraki-shi, Osaka, Japan. After 6 months since then, the soil was turned up and carefully washed with water, and the residues of the pressure-sensitive tape were determined. The result showed that the pressure-sensitive tape was completely decomposed and vanished.

## EXAMPLE 2

After melt-mixing (temperature 200°C) the copolymer [P(76%3HB-co-24%HV)] used in Example 1 described above and commercially available polypropylene (UBE Polypro J109GB, trade name, made by

Ube Industries, Ltd.) at 5 : 5 by weight ratio, the molten mixture was molded by a T die-equipped single screw extruder (T-die temperature 200 °C) to form a film having a thickness of 500 µm and a width of 60 cm. The film was used as a substrate film.

The same pressure-sensitive adhesive as in Example 1 was coated on one surface of the substrate film to obtain a pressure-sensitive adhesive tape having a thickness of 120 µm.

The pressure-sensitive adhesive tape was buried in the soil in the same manner as in Example 1. After 6 months since then, the decomposable property of the tape was evaluated. It was confirmed that both the substrate film and the pressure-sensitive adhesive layer were completely decomposed and vanished.

EXAMPLE 3

After melt-mixing (temperature 200 °C) the copolymer [P(76%3HB-co-24%3HV)] used in Example 2 and polypropylene (UBE Polypro J109GB, trade name, made by Ube Industries, Ltd.) at 2 : 8 by weight ratio, the molten mixture was molded by a T die-equipped single screw extruder (T-die temperature 200 °C) to obtain a film having a thickness of 100 µm and a width of 60 cm. The film was used as a substrate film.

The same pressure-sensitive adhesive as in Example 1 was coated on one surface of the substrate film to obtain a pressure-sensitive adhesive tape having a thickness of 120 µm.

The pressure-sensitive adhesive tape was baried in the soil in the same manner as in Example 1 and after 6 months since then, the decomposable propety thereof was evaluated. It was confirmed that both the substrate film and the pressure-sensitive adhesive layer were completely decomposed and vanished.

EXAMPLE 4

A polyester was produced using Pseudomonas oleovorans ATCC-29347 as follows.

A culture liquid was prepared using diammonium phosphate as a nitrogen source, inorganic nutrients such as phosphorus, magnesium, a slight amount element solution, etc., and sodium octanoate as a carbon source according to the following formulation.

(In 1 liter of distilled water):

| | |
|---|---|
| $K_2HPO_4$ | 5.8 g |
| $KH_2PO_4$ | 3.7 g |
| Sodium octanoate | 5.0 g |
| $MgSO_4$ | 0.12 g |
| $(NH_4)_2HPO_4$ | 1.1 g |
| Slight amount element solution* | 1 ml |

(*): The slight amount element solution is a solution containing the following nutrients in 1N hydrochloric acid.

| | |
|---|---|
| $FeSO_4.7H_2O$ | 2.78 g |
| $MnCl_2.4H_2O$ | 1.98 g |
| $CoSO_4.7H_2O$ | 2.81 g |
| $CaCl_2.2H_2O$ | 1.67 g |
| $CuCl_2.2H_2O$ | 0.17 g |
| $ZnSO_4.7H_2O$ | 0.29 g |

After adjusting pH of the culture liquid to 7.0, the incubation of the second stage was conducted in the culture liquid at 30 °C for 48 hours, whereby the growth of the cells and the formation and accumulation of the polyester in the cells were conducted.

After completion of the incubation, the cells thus grown were separated from the culture liquid by centrifugal separation and after washing the cells with water, the polyester formed was extracted with chloroform. The extract was once concentrated and methanol was added to the concentrate to precipitate the polyester thus extracted. The precipitates were collected and dried to obtain the polyester originated from the microorganism.

From the integrated result of 100 MHz $^1$H-NMR, it was confirmed that the composition of the polyester obtained was composed of 7% of 3-hydroxyhexanoate (hereinafter referred to as "3HHx"), 90% of 3-hydroxyoctanoate (hereinafter referred to as "3HO"), and 3% of 3-hydroxydecanoate (hereinafter referred to as "3HD").

20 Parts by weight of the polyester [P(7%3HHx-co-90%3HO-co-3%3HD), 80 parts by weight of a commercially available polyamide elastomer (Pepax 5562 MN01, trade name, made by Toray Industries, Inc.), 70 parts by weight of a tackifier composed of an aliphatic petroleum resin (softening point 90 °C), 20 parts by weight of a softening agent composed of a rosin resin which was in a liquid state at room temperature, and 1 part by weight of an antioxidant composed of a phenolic compound were kneaded at 140 °C to obtain a pressure-sensitive adhesive.

The pressure-sensitive adhesive was coated on one surface of a polyethylene terephthalate substrate film having a thickness of 100 µm to obtain a pressure-sensitive adhesive tape having a thickness of 120 µm.

The pressure-sensitive adhesive tape was buried in the soil in the same manner as in Example 1 and the decomposable property thereof after 6 months since then was evaluated. The result showed that the pressure-sensitive adhesive layer was completely decomposed but the substrate film only left without being decomposed.

## EXAMPLE 5

A mixture of 70 parts by weight of the polyester [P(7%3HHx-co-90%3HO-co-3%3HD) as used in Example 4, 60 parts by weight of the polyamide elastomer as used in Example 4, 70 parts by weight of a tackifier composed of an aliphatic petroleum resin (softening point 90 °C), 20 parts by weight of a rosin resin which was in a liquid state at room temperature, and 1 part by weight of an antioxidant composed of a phenolic compound was kneaded at 140 °C to obtain a pressure-sensitive adhesive.

The pressure-sensitive adhesive was coated on one surface of a polyethylene terephthalate substrate film having a thickness of 100 µm to obtain a pressure-sensitive adhesive tape having a thickness of 120 µm.

The pressure-sensitive adhesive tape was buried in the soil in the same manner as in Example 1 and the decomposable property thereof after 6 months since then was evaluated. The result showed that the pressure-sensitive adhesive layer was completely decomposed and the substrate film only left without being

decomposed.

EXAMPLE 6

An aliphatic polyester (Bionolle V#1000, trade name, made by Showa Kobunshi K.K.) was molded by a T die-equipped single screw extruder (T-die temperature 150 °C) to obtain a film having a thickness of 100 µm and a width of 60 cm and the film was used as a substrate film.

To 100 parts by weight of ethyl acetate were added 95 parts by weight of butyl acrylate, 5 parts by weight of acrylic acid, and 0.4 part by weight of azobisisobutyronitrile as a polymerization initiator and the polymerization was conducted at 60 °C for 10 hours. To the polymer solution thus obtained was added an epoxy crosslinking agent (N,N,N',N'-tetraglycidyl-m-xylenediamine) in an amount of 0.2 part by weight per 100 parts by weight of the polymer to synthesize a pressure-sensitive adhesive solution.

The pressure-sensitive adhesive solution was coated on the above substrate film and dried at 80 °C for 10 minutes to obtain a pressure-sensitive adhesive tape having a thickness of 120 µm.

When the pressure-sensitive adhesive tape was buried in the soil in the same manner as in Example 1 and the decomposable property thereof after 6 months since then was evaluated, it was confirmed that the substrate film was completely decomposed but several pieces of the pressure-sensitive adhesive layer were observed.

EXAMPLE 7

A cellulose was produced using Acetobactor xylinum IFO-13693 as follows.

A culture liquid was prepared by adding 10 g of D-glucose, 10 g of polypeptone, 3 g of a yeast extract, 2 g of sodium chloride, 1.4 g of disodium hydrogenphosphate, and 0.35 g of citric acid, and pH of the culture liquid was adjusted to 6.8. The cell was incubated by allowing to stand the cell in the culture liquid at 28 °C for 96 hours. In this case, with the growth of the cell, the synthesis of a cellulose was conducted and after 48 hours of the incubation, the cellulose was produced on the surface of the culture medium to obtain a gelatinous product.

After completion of the incubation, the gelatinous product was immersed in a 1% sodium hydroxide aqueous solution to remove proteins. The gelatinous product was neutralized with a 1% acetic acid aqueous solution and further washed with water to obtain a gelatinous product of bacteria cellulose.

The gelatinous product of the bacteria cellulose was press-molded at 120 °C to form a film having a thickness of 100 µm and the film was used as a substrate film.

The same pressure-sensitive adhesive as in Example 1 was coated on one surface of the substrate film to obtain a pressure-sensitive adhesive tape having a thickness of 120 µm.

The pressure-sensitive adhesive tape was buried in the soil in the same manner as in Example 1 and the decomposable property thereof after 6 months since then was evaluated. The result showed that both the substrate film and the pressure-sensitive adhesive layer were completely decomposed and vanished.

EXAMPLE 8

A 12% aqueous solution of commercially available pullulan (P120, trade name, made by Hayashibara K.K.) was casted on a glass plate and dried at 120 °C to form a film having a thickness of 100 µm and a width of 30 cm. The film was used as a substrate film.

The same pressure-sensitive adhesive as used in Example 1 was coated on one surface of the substrate film and dried to obtain a pressure-sensitive adhesive tape having a thickness of 120 µm.

The pressure-sensitive adhesive tape was buried in the soil in the same manner as in Example 1 and the decomposable property thereof after 6 months since then was evaluated. The results showed that both the substrate film and the pressure-sensitive adhesive layer were completely decomposed and vanished.

EXAMPLE 9

To 5% aqueous hydrochloric acid solution was added the ground product of the crust of a red king crab and after stirring the mixture at room temperature for 5 hours, the product was filtered. The residual solids were further transferred into a 5% sodium hydroxide aqueous solution and after stirring at 90 °C for 3 hours, the mixture was filtered. The residual solid product was washed with water to obtain chitin. The chitin was dissolved in a mixed solution of N,N-dimethylacetamide (80% by weight) containing 5% lithium chloride and N-methylpyrrolidone (20% by weight) to form a 5% chitin solution. The solution was casted on a glass plate

and dried under a reduced pressure to obtain a film having a thickness of 100 µm and a width of 30 cm. The film was used as a substrate film for a pressure-sensitive adhesive tape.

The same pressure-sensitive adhesive as used in Example 1 was coated on one surface of the substrate film to obtain a pressure-sensitive adhesive tape having a thickness of 120 µm.

When the pressure-sensitive adhesive tape was buried in the soil in the same manner as in Example 1 and the decomposable property after 6 months since then was evaluated, it was confirmed that both the substrate film and the pressure-sensitive adhesive layer were completely decomposed and vanished.

EXAMPLE 10

Chitin obtained in Example 9 was transferred into a 50% sodium hydroxide aqueous solution and after stirring at 90 °C for 3 hours, the solution was filtered. Precipitated solids were collected, sufficiently washed with water and dried at 90 °C to obtain chitosan. The chitosan was dissolved in an acetic acid aqueous solution to obtain a 2% chitosan solution.

The solution was casted on a glass plate and dried at 100 °C to obtain a film hving a thickness of 100 µm and a width of 30 cm. The film was used as a substrate film of a pressure-sensitive adhesive tape.

The same pressure-sensiive adhesive as used in Example 1 was coated on one surface of the substrate film and dried to obtain a pressure-sensitive adhesive tape having a thickness of 120 µm.

When the pressure-sensitive adhesive tape was buried in the soil in the same manner as in Example 1 and the decomposable property thereof after 6 months since then was evaluated, it was confirmed that both the substrate film and the pressure-sensitive adhesive layer were completely decomposed and vanished.

EXAMPLE 11

Commercially available starch-modified polyvinyl alcohol (Mater-Bi AF10H, trade name, made by Novamonto S.P.A.) was molded by a T die-equipped single screw extruder (T-die temperature 150 °C) to form a film having a thickness of 100 and a width of 60 cm and the film was used as a substrate film.

The same pressure-sensitive adhesive as used in Example 1 was coated on one surface of the substrate film to obtain a pressure-sensitive adhesive tape having a thickness of 120 µm.

When the pressure-sensitive adhesive tape was buried in the soil in the same manner as in Example 1 and the decomposable property thereof after 6 months since then was evaluated, it was confirmed that both the substrate film and the pressure-sensitive adhesive layer were decomposed and vanished.

COMPARATIVE EXAMPLE 1

After melt-mixing (temperature 200 °C) the copolymer [P(76%3HB-co-24%3HV) as used in Example 2 and polypropylene at 1 : 9 by weight ratio, the molten mixture was molded by a T die-equipped single screw extruder (T-die temperature 200 °C) to form a film having a thickness of 100 µm and a width of 60 cm and the film was used as a substrate film.

A mixture of 10 parts by weight of the copolymer [P(76%3HB-co-24%3HV) as used in Example 1, 100 parts by weight of the polyamide elastomer as used in Example 4, 70 parts by weight of a tackifier composed of an aliphatic petroleum resin (softening point 90 °C), 20 parts by weight of a softening agent composed of a rosin resin which was in a liquid state at room temperature), and 1 part by weight of an antioxidant was kneaded at 140 °C to obtain a pressure-sensitive adhesive.

The pressure-sensitive adhesive was coated on one surface of the substrate film to obtain a pressure-sensitive adhesive tape having a thickness of 120 µm.

When the pressure-sensitive adhesive tape was buried in the soil in the same manner as in Example 1 and the decomposable property thereof after 6 months since then was evaluated, the pressure-sensitive adhesive tape left without being decomposed.

As described above in detail, the present invention is a pressure-sensitive adhesive tape comprising a substrate film and a pressure-sensitive adhesive layer containing a polymeric elastomer formed on at least one surface thereof, wherein the substrate film and/or the pressure-sensitive adhesive layer contains at least 20% by weight of a biodegradable high molecular weight material. Thus, as is clear from the examples described above, since when the pressure-sensitive adhesive tape of the present invention is allowed to stand as it is in a natural environment, it is easily decomposed with microorganisms in soil or a waste system or a treatment system utilizing an enzyme, the pressure-sensitive adhesive tape of the present invention has an excellent effect that it can be widely used in various industrial fields, for example, an agriculture and forest or gardening field such as wrapping of fruits with bags, bundling of vegitables, etc., a

hygiene field such as fixing of diapers, sanitary towels, etc., a medical field such as plasters, dressings, etc., and a packaging field without causing an environmental disruption without requiring a large apparatus, etc., for the waste treatment thereof.

While the invention has been described in detail and with reference to specific embodiments thereof, it will be apparent to one skilled in the art that various changes and modifications can be made therein without departing from the spirits and scope thereof.

## Claims

1. A pressure-sensitive adhesive tape comprising a substrate film and a pressure-sensitive adhesive layer containing a polymeric elastomer formed on at least one surface of the substrate film, wherein the substrate film and/or the polymeric elastomer of the pressure-sensitive adhesive layer contains at least 20% by weight based on the weight of the polymeric elastomer of a biodegradable high molecular weight material.

2. A pressure-sensitive adhesive tape as claimed in claim 1, wherein the biodegradable high molecular weight material is an aliphatic polyester having a repeating unit represented by the following formula (1);

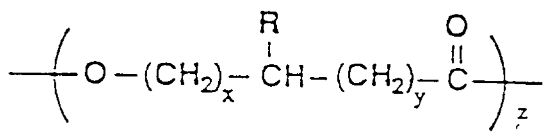

(1)

wherein x represents an integer of at least 0; y and z each represents an integer of at least 1; and R represents a hydrogen atom, a saturated aliphatic hydrocarbon group, an unsaturated aliphatic hydrocarbon group, or a saturated hydrocarbon group having a halogen atom or a functional group selected from a hydroxyl group, a carboxyl group, a sulfonic acid group, and an amino group at the terminal thereof.

3. A pressure-sensitive adhesive tape as claimed in claim 1, wherein the biodegradable high molecular weight material is an aliphatic polyester having a repeating unit represented by following formula (2);

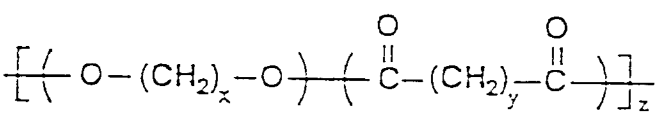

(2)

wherein x, y, and z each represents an integer of at least 1.

4. A pressure-sensitive adhesive tape as claimed in claim 1, wherein the biodegradable high molecular weight material is bacteria-cellulose and/or pullulan each originated from a microorganism.

5. A pressure-sensitive adhesive tape as claimed in claim 1, wherein the biodegradable high molecular weight material is chitin and/or chitosan each originated from a natural material.

6. A pressure-sensitive adhesive tape as claimed in claim 1, wherein the biodegradable high molecular weight material is a mixture of from 20 to 90% by weight of a starch and from 80 to 10% by weight of a synthetic resin.

Fig. 1

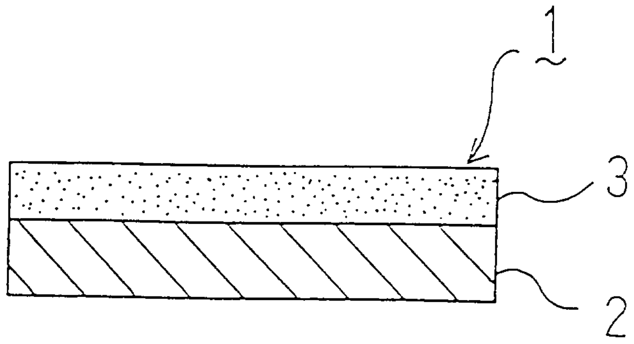


Fig. 2

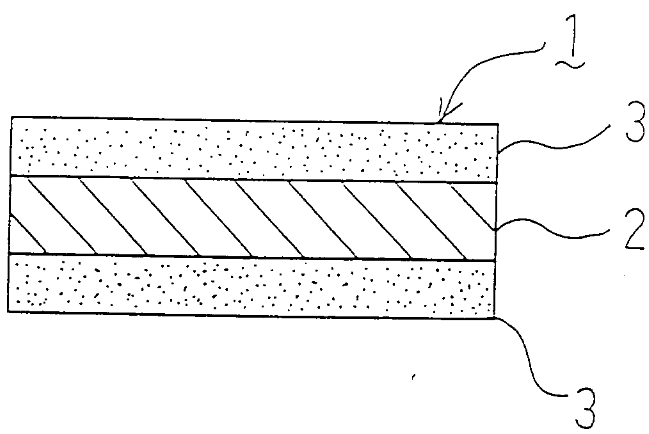


Fig. 3

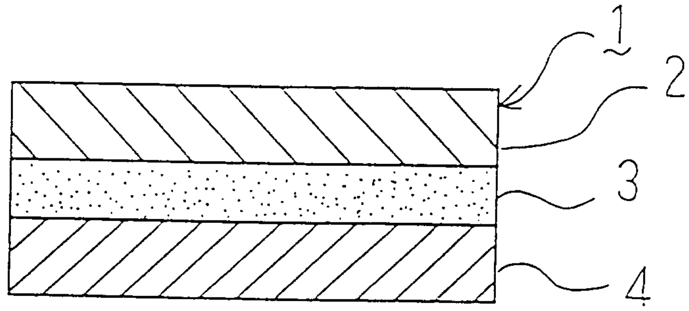

European Patent Office

# EUROPEAN SEARCH REPORT

Application Number
EP 94 10 0800

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DATABASE WPI<br>Week 9238,<br>Derwent Publications Ltd., London, GB;<br>AN 92-313325<br>& JP-A-4 220 478 (OKAMOTO CO LTD) 11 August 1992<br>* abstract * | 1 | C09J7/02 |
| Y | | 2 | |
| Y | WO-A-92 01733 (ICI AMERICAS INC.) 6 February 1992<br>* page 1, line 29 - line 35 *<br>* page 5, line 5 - line 17 * | 2 | |
| Y | EP-A-0 435 435 (DIRECTOR-GENERAL OF THE AGENCY OF INDUST. SCIENCE & TECHNOLOGY)<br>* abstract; claims 1-4,7 * | 2 | |
| A | DATABASE WPI<br>Week 9242,<br>Derwent Publications Ltd., London, GB;<br>AN 92-345998<br>& JP-A-4 251 887 (MITSUBISHI RAYON CO LTD) 8 September 1992<br>* abstract * | 1 | TECHNICAL FIELDS SEARCHED (Int.Cl.5)<br>C09J<br>C08L |
| A | FR-A-2 147 112 (HAYASHIBARA BIOCHEMICAL LABORATORIES) | 4 | |
| A | GB-A-2 042 570 (DAINICHISEIKA COLOR & CHEMICALS MFG. CO)<br>* page 1, line 13 - line 18 * | 5 | |

The present search report has been drawn up for all claims

| Place of search | Date of completion of the search | Examiner |
|---|---|---|
| THE HAGUE | 20 May 1994 | Girard, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document